# EUROPEAN PATENT APPLICATION

(11) **EP 1 155 774 A2**
(43) Date of publication of application: **21.11.2001**
(21) Application number: 01111594.6
(22) Date of filing: 12.05.2001
(51) Int. Cl.: B23Q 11/00

(54) **Interception unit to be inserted in a metal chip transport system**

(30) Priority: 15.05.2000 IT VI000094
(71) Applicant: FAMA S.r.l., 36030 Fara Vicentino (Vicenza) (IT)
(72) Inventor: Carraro Alberto, 36030 Fara vicentino (IT)
(74) Representative: Bettello, Pietro, Dott. Ing.

(57) **Abstract**

It is an intercepting unit inserted in a metal chip transport system, where chips are handled through a suction action of the same through manifolds maintained at negative relative pressure. Said intercepting unit is characterised in that it comprises two pneumatic devices, of which one activates the air flow that sweeps the chip manifold, and the other controls the opening and closing of a gate that lets the collected chips fall in the discharge pipe.

## Description

The present invention relates to an interception unit to be inserted in a metal chip transport system.

It is known that in metal turnery departments, where medium and large series of pieces are produced starting from bars, there is the problem of a quick disposal of metal chip.

According to the prior art, the chip yielded by the tool machine is collected into removable containers for emptying, and arranged below the machine, or it is continuously removed by means of central systems.

Both collection and disposal methods exhibit disadvantages.

In fact, with the first method a continuous handling of trucks is needed, with consequent oil spreading over the floor and the use of manual labour.

Similarly, with the second method there is the possibility of oil infiltration under the floor, due to welding imperfections.

Moreover, this second method requires the execution of building works, which must often be performed with non-operating machines; moreover, it cannot be used in upper floors of the buildings and is not adapted for workshops that machine more materials and, due to the circuit stiffness, imposes the machine alignment, which is often very difficult.

The present finding relates to a system for transporting the chip from the machine yielding point to the collection point, which can be installed following the business layout; it is applicable to operating machines and does not require new and specific building works. Moreover, it does not imply large overall dimensions since it travels in height and allows, with dedicated lines, the separate recovery of two metals, without any reciprocal pollution.

In this type of system, chip handling occurs through a suction action over the same through manifolds maintained at negative relative pressure.

To ensure the regular system operation, consisting of small-diameter piping, it is necessary to install an interception unit at the base of each operating machine, which opens and closes alternately according to the load of chips to be discharged from the same machine.

The construction and the operation of said interception unit are the novelty feature of the finding.

Substantially, the interception unit consists of a sieve that separates machined pieces of material from chips, leaving them fall into an accumulation area where, as a sensor detects their presence, it communicates it to a PLC, which actuates two pneumatic devices, of which one activates the air flow that sweeps the manifold, and the other controls the opening and closing of a gate that allows the collected chips to fall in the pipe maintained at negative relative pressure.

The operating steps of the entire system are programmed so that only one interception unit at a time operates, according to what is logically required.

These and other features of the finding will appear more clearly from the description of a possible embodiment of the single interception unit, made by way of an illustrative and non-limiting example with reference to the attached drawings. In such drawings:

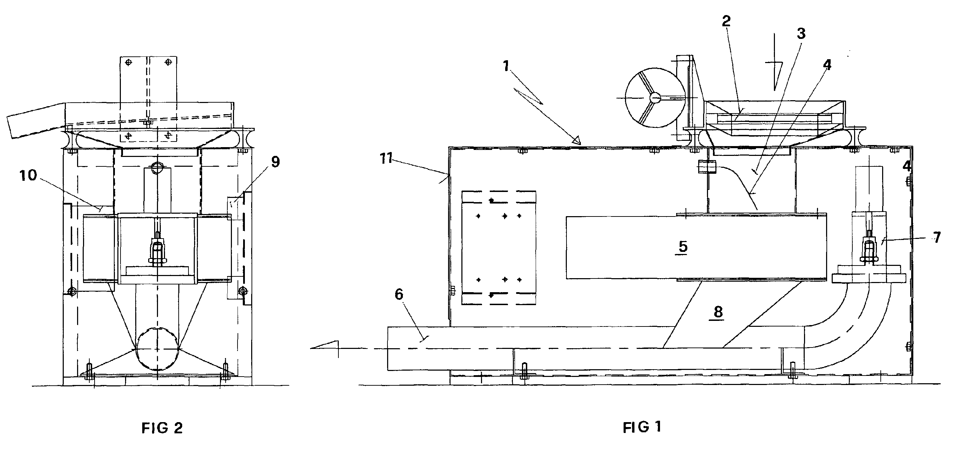

- Figures 1 and 2 (Table I) respectively show the front view and side view of the unit of the finding;

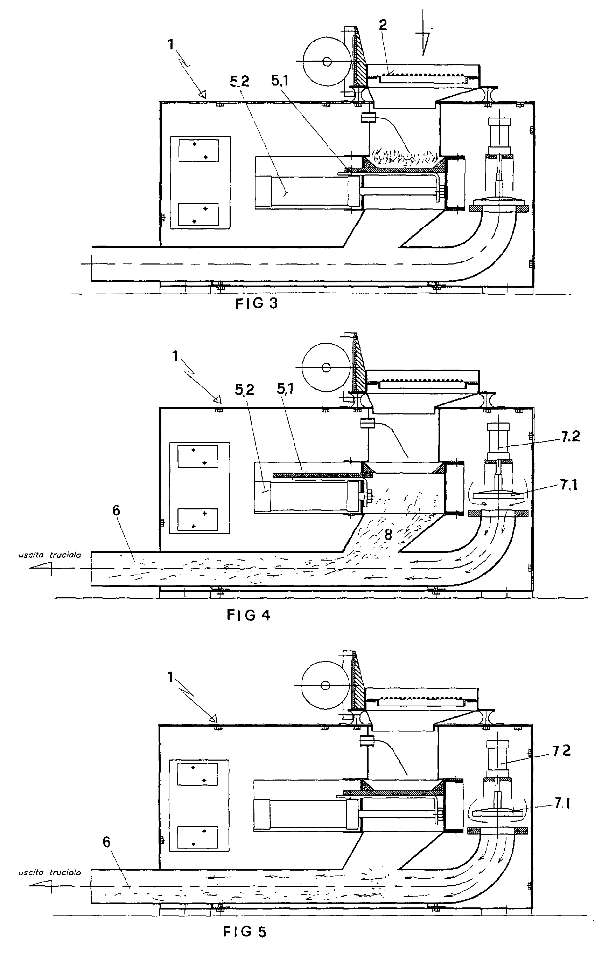

- Figures 3, 4 and 5 (Table II) show elevation and sectioned views of the unit according to the finding, respectively in the chip loading step, in the chip suction step and in the discharge pipe washing step.

As it can be seen in the figures, the interception unit 1 of the finding, arranged immediately downstream of the operating machine, not shown, and connected to the centralised suction system, not shown, consists of a vibrating sieve 2 that separates the machines pieces of material from the chips, by letting them fall into the collecting hopper 3, provided with a product presence indicator 4.

In its lower side, the hopper is closed by an electropneumatic guillotine unit 5, consisting of a gate 5.1 controlled by a pneumatic cylinder 5.2, which regulates the fall of the chips into the discharge pipe 6.

Said discharge pipe 6, which is maintained at negative relative pressure so as to remove chips through suction, is provided with an electropneumatic system 7 for the "washing air opening", consisting of a closing plug 7.1 controlled by a pneumatic piston 7.2.

Such electropneumatic system 7 is used for generating an air flow incoming from the outside, that facilitates the chip suction along the evacuation pipe 6, so that since the same are soaked with oil, when they fall from the hopper they are prevented from packing together, thus forming a compact block, difficult to be removed.

In order to prevent such chip packing, there is provided a manifold 8, arranged between hopper 3 and the suction duct 6, which facilitates the chip introduction into the piping.

Moreover, with the above electropneumatic unit 7 it is possible to clean the evacuation pipe 6 because, an air flow is sucked from the outside, that "sweeps" possible chips remained at the base of manifold 8 by virtue of the negative relative pressure existing within pipe 6 when gate 5.1 is closed and the closing plug 7.1 is open.

The entire unit 1, controlled by an electronic gearcase that drives solenoid valves 9 and 10, is entirely enclosed in a painted plate envelope 11.

Of course, alternative embodiments are possible with respect to that illustrated, in function of the products to be machined, without departing from the scope of the following claims.

## Claims

1. INTERCEPTING UNIT INSERTED IN A METAL CHIP TRANSPORT SYSTEM, of the type where chips are handled through a suction action of the same through manifolds maintained at negative relative pressure, said intercepting unit, arranged at the base of each operating machine, being **characterised in that** it comprises a sieve that separates machined pieces of material from chips, making them fall into an accumulation area where, as a sensor detects their presence, it communicates it to a PLC, which actuates two pneumatic devices, of which one activates the air flow that sweeps the manifold, and the other controls the opening and closing of a gate that allows the collected chips to fall in the discharge pipe.

2. INTERCEPTION UNIT (1) according to claim 1, **characterised in that** the vibrating sieve (2) selects the chips, making them fall into the collecting hopper (3), provided with a product presence indicator (4), said hopper being closed in its lower side by an electropneumatic guillotine unit (5) consisting of a gate (5.1) controlled by a pneumatic cylinder (5.2) which regulates the fall of the chips into the discharge pipe (6).

3. INTERCEPTION UNIT (1) according to claim 2, **characterised in that** the discharge pipe (6) that is maintained at negative relative pressure so as to remove chips through suction, is provided with an electropneumatic system (7/ for the "washing air opening", consisting of a closing plug (7.1) controlled by a pneumatic piston (7.2), said electropneumatic system (7) being capable of generating an air flow incoming from the outside, that facilitates the chip suction along the evacuation pipe (6), thus preventing them from packing when falling from the hopper, and forming a compact block, difficult to be removed.

4. INTERCEPTION UNIT (1) according to claim 2, **characterised in that** there is provided the insertion of a manifold (8) arranged between the hopper (3) and the suction pipe (6), so as to facilitate the chip introduction into the piping.

5. INTERCEPTION UNIT (1) according to one or more of the previous claims, **characterised in that** with the electropneumatic unit (7) it is possible to clean the evacuation pipe (6) since in the condition with gate (5.1) closed and closing plug (7.1) open, for the effect of the negative relative pressure existing into the same pipe, an air flow is sucked from the outside, that "sweeps" optional chips remaining at the base of the manifold (8).

6. INTERCEPTING UNIT according to one or more of the previous claims, **characterised in that** it is controlled by an electronic gearcase driving solenoid valves (9, 10).

7. INTERCEPTION UNIT according to one or more of the previous claims, **characterised in that** it is entirely enclosed in a painted plate envelope (11).
